# EUROPÄISCHE PATENTANMELDUNG

(11) **EP 3 888 443 A1**
(43) Veröffentlichungstag der Anmeldung: **06.10.2021**
(21) Anmeldenummer: 20212254.5
(22) Anmeldetag: 07.12.2020
(51) Int. Cl.: A01D 43/08, A01D 69/02, B60K 6/30, B60K 6/387, B60L 50/15

(54) **LANDWIRTSCHAFTLICHE ARBEITSMASCHINE**

(30) Priorität: 31.03.2020 DE 102020108888
(71) Anmelder: CLAAS Selbstfahrende Erntemaschinen GmbH, 33428 Harsewinkel (DE)
(72) Erfinder: Sprigade, Daniel, 59427 Unna (DE); Heymann, Philipp, 59519 Möhnesee Wamel (DE)
(74) Vertreter: CLAAS Gruppe

(57) **Zusammenfassung**

Die Erfindung betrifft eine landwirtschaftliche Arbeitsmaschine, die unter Anwesenheit eines Fahrers (2) in einem manuellen Modus manuell fahrbar und insbesondere in einem Automatikmodus selbstfahrbar ist, wobei ein Leistungsverbraucher (8) in Form eines Fahrantriebs (9) und mindestens ein weiterer Leistungsverbraucher (6) vorgesehen sind, wobei ein Energiebereitstellungssystem (10) mit einer Verbrennungskraftmaschine (11), einer Hilfskraftmaschine (12) und einem Energiespeicher (15) für die Hilfskraftmaschine (12) vorgesehen ist, wobei die Leistungsverbraucher (6, 8) von dem Energiebereitstellungssystem (10) antreibbar sind, wobei ein Fahrerassistenzsystem (17) mit einer Regeleinrichtung (18) vorgesehen ist, die konfiguriert ist, eine Regelung der Verbrennungskraftmaschine (11), der Hilfskraftmaschine (12) und mindestens eines der weiteren Leistungsverbraucher (6) durchzuführen, und die in dem manuellen Modus und insbesondere dem Automatikmodus die Drehzahl an einer Abtriebswelle (16) der Verbrennungskraftmaschine (11) derart regelt, dass sie bei variierendem Leistungsbedarf des Fahrantriebs (9) und mindestens einen weiteren Leistungsverbrauchers (6) auf einem konstanten Wert oder in einem konstanten Wertebereich gehalten wird. Es wird vorgeschlagen, dass die landwirtschaftliche Arbeitsmaschine (1) ein Rückmeldungssystem (19) aufweist, das konfiguriert ist, dem Fahrer (2) eine von einer Gesamtauslastung des Energiebereitstellungssystems (10) abhängige Rückmeldung zu geben.

## Beschreibung

Die vorliegende Erfindung betrifft eine landwirtschaftliche Arbeitsmaschine gemäß dem Oberbegriff von Anspruch 1.

Der bekannte Stand der Technik (DE 10 2016 118 566 A1), von dem die Erfindung ausgeht, betrifft eine landwirtschaftliche Arbeitsmaschine gemäß dem Oberbegriff von Anspruch 1.

Unter einer landwirtschaftlichen Arbeitsmaschine wird jegliche Form von Arbeitsfahrzeug verstanden, das insbesondere mit einem eigenen Fahrantrieb (Antriebsachse mit Antriebsrädern) versehen ist, aber alternativ auch als Fahrzeug ohne eigenen Antrieb, beispielsweise als Hänger, ausgebildet sein kann. Nur beispielhaft erwähnt seien als landwirtschaftliche Arbeitsmaschinen Mähdrescher, Feldhäcksler oder Schlepper mit Anbauten wie Düngerstreuer, Sämaschinen, Spritzeinrichtungen, Wender, Schwader o. dgl..

Auf dem technischen Gebiet der Landwirtschaft ist es bekannt, verschiedene Abläufe einer landwirtschaftlichen Arbeitsmaschine automatisiert oder teilautomatisiert ablaufen zu lassen, darunter unter anderem den Betrieb und die Steuerung eines Großteils der Arbeitsaggregate der Arbeitsmaschine. Unter einem Arbeitsaggregat wird insbesondere eine landwirtschaftliche Arbeit unterstützende oder verrichtende und dadurch Leistung verbrauchende Komponente der Arbeitsmaschine verstanden. Neben den vorgenannten Anbauten sind dies beispielsweise Haspel, Schneidwerk, Dreschwerk, Fördereinrichtungen (Förderschnecke oder -band), Hubwerke (Front- oder Heckhubwerk) o. dgl..

Während der Fahrt eines Mähdreschers durch den Feldbestand wird beispielsweise dessen Haspel und Schneidwerk betrieben. Außerdem wird das Schnittgut über Förderschnecken und -bänder durch einen Einzugskanal transportiert, wobei das Schnittgut auch ein Dreschwerk durchläuft. Die einzelnen Komponenten werden im Bedarfsfall automatisch zugeschaltet oder getrennt. Beispielsweise ist denkbar, dass, wenn ein Mähdrescher in einen Feldbestand hineinfährt, ein Fronthubwerk mit daran angeordneter Haspel und Schneidwerk abgesenkt wird und Haspel, Schneidwerk, Förderschnecken und -bänder sowie Dreschwerk eingeschaltet werden. Beim Ausfahren aus dem Feldbestand oder bei einer Wende ist es wiederum denkbar, dass Haspel, Schneidwerk, Förderschnecken und -bänder sowie Dreschwerk ausgeschaltet und das Fronthubwerk mit daran angeordneter Haspel und Schneidwerk angehoben wird.

Die in Rede stehenden landwirtschaftlichen Arbeitsmaschinen weisen üblicherweise eine Verbrennungskraftmaschine, insbesondere einen Dieselmotor, als gemeinsamen Antrieb für die Arbeitsaggregate und den Fahrantrieb auf. Als einziger Energiespeicher dient der Verbrennungskraftmaschine ein Kraftstofftank.

Es sind auch Arbeitsmaschinen bekannt, die neben einer als Hauptmaschine betriebenen Verbrennungskraftmaschine noch eine separate Hilfskraftmaschine in Form einer Elektromaschine aufweisen. Diese dient in der Regel ausschließlich dazu, dass der Fahrer der landwirtschaftlichen Arbeitsmaschine im Bedarfsfall die Systemleistung kurzzeitig um die Leistungsfähigkeit der Elektromaschine steigern kann (sogenannter Boost-Betrieb). Als Energiespeicher dient der Hilfskraftmaschine beispielsweise ein Akku.

Es ist auch ein Hybridsystem bekannt, bei dem eine elektrische Hilfskraftmaschine Lastschwankungen bedingt durch Unterschiede in der Bestandsdichte ausgleicht. Bei einem plötzlichen Lastanstieg aufgrund einer Erhöhung der Dichte des Erntegutbestands stellt die elektrische Hilfskraftmaschine sofort zusätzliche Leistung zur Verfügung, wodurch die Drehzahl an einer Abtriebswelle der Verbrennungskraftmaschine weitestgehend konstant gehalten wird.

Es ist dabei eine Herausforderung, in einem manuellen Arbeitsmodus, in dem ein Fahrer die landwirtschaftliche Arbeitsmaschine manuell fährt und die Drehzahl an der Antriebswelle der Verbrennungskraftmaschine mittels der Hilfskraftmaschine konstant gehalten wird, eine durch die Fahrweise des Fahrers erzeugte Erhöhung einer Auslastung der Hilfskraftmaschine zu verhindern.

Der Erfindung liegt das Problem zugrunde, die bekannte landwirtschaftliche Arbeitsmaschine derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Besonders bevorzugte Ausgestaltungen sind Gegenstand der Unteransprüche.

Wesentlich ist die grundsätzliche Überlegung, dass, wenn in einem manuellen Modus der Arbeitsmaschine durch das Fahrerassistenzsystem die Drehzahl der Abtriebswelle konstant gehalten wird, dem Fahrer eine Rückmeldung über die Gesamtauslastung des Energiebereitstellungssystems gegeben werden soll. Mit der "Gesamtauslastung des Energiebereitstellungssystems" ist die Auslastung gemeint, die sich durch alle vom Energiebereitstellungssystem mit Energie versorgbaren Komponenten, insbesondere des Antriebsstrangs, ergibt, das heißt durch die Verbrennungskraftmaschine, Hilfskraftmaschine, Leistungselektronik, Energiespeicher etc. Die Rückmeldung verhindert, dass der Fahrer zu hohe Lasten fährt und der Energiespeicher der Hilfskraftmaschine durch das Konstanthalten der Drehzahl der Abtriebswelle zu schnell oder vollständig geleert werden würde.

Im Einzelnen wird vorgeschlagen, dass die landwirtschaftliche Arbeitsmaschine ein Rückmeldungssystem aufweist, das konfiguriert ist, dem Fahrer eine von einer Gesamtauslastung des Energiebereitstellungssystems abhängige Rückmeldung zu geben.

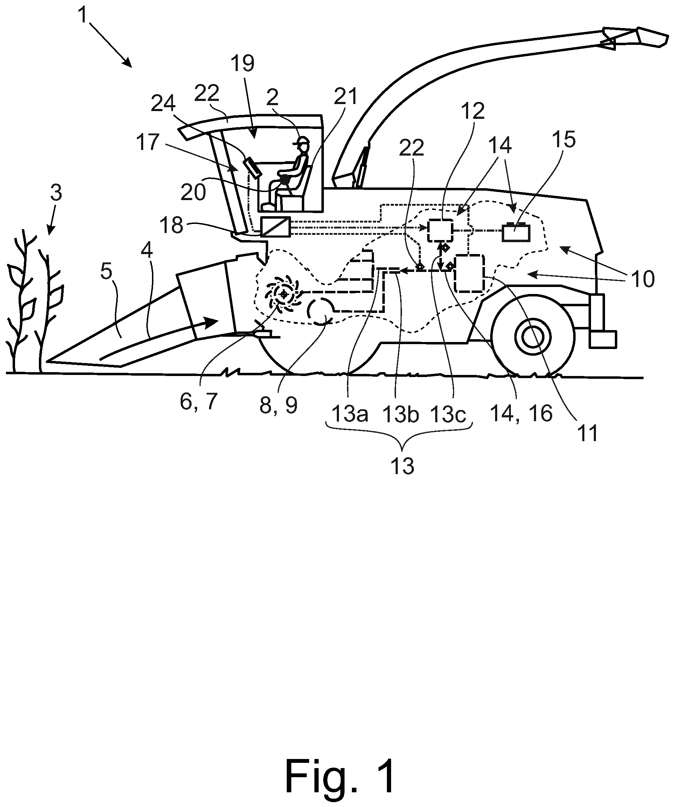

Im Folgenden wird die Erfindung anhand einer lediglich Ausführungsbeispiele darstellenden Zeichnung näher erläutert. In der Zeichnung zeigt
- Fig. 1: eine schematische Seitenansicht einer landwirtschaftlichen Arbeitsmaschine gemäß der vorliegenden Erfindung während des Bearbeitens des Feldbestands und

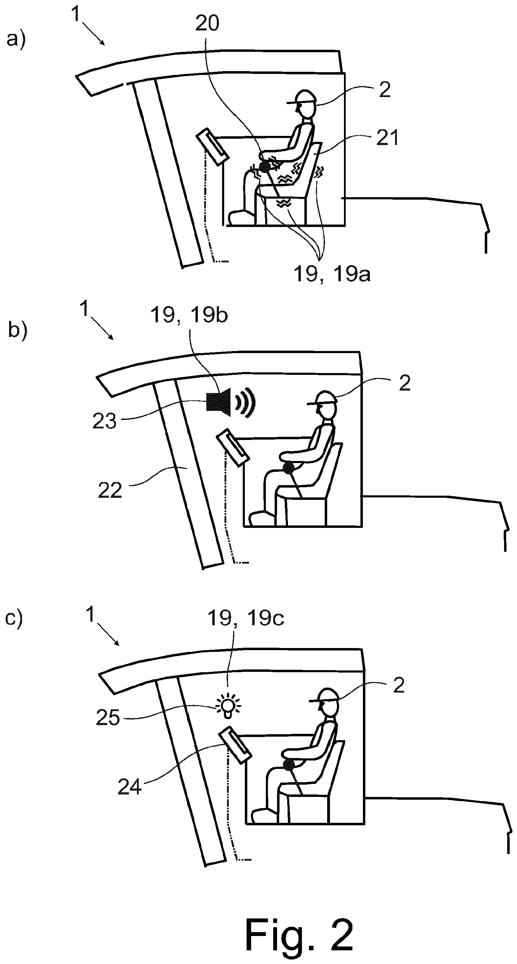

- Fig. 2: eine schematische Seitenansicht einer landwirtschaftlichen Arbeitsmaschine a) gemäß eines ersten Ausführungsbeispiels, die ein Rückmeldungssystem aufweist, das eine haptische Rückmeldung gibt, b) gemäß eines zweiten Ausführungsbeispiels, die ein Rückmeldungssystem aufweist, das eine akustische Rückmeldung gibt und c) gemäß eines dritten Ausführungsbeispiels, die ein Rückmeldungssystem aufweist, das eine optische Rückmeldung gibt.

Die Zeichnung zeigt eine vorschlagsgemäße landwirtschaftliche Arbeitsmaschine 1 in Form eines Feldhäckslers. Die hier und vorzugsweise unter Anwesenheit eines Fahrers 2 in einem manuellen Arbeitsmodus manuell fahrbare und in einem Automatikmodus selbstfahrbare als Erntemaschine ausgebildete Arbeitsmaschine 1 wird durch einen Feldbestand 3, beispielsweise ein Maisfeld, gefahren. Ein Gutfluss 4 aus Pflanzenteilen wird während des Betriebs durch einen Einzugskanal 5 eingezogen und zum Zwecke der weiteren Zerkleinerung zu einem Leistungsverbraucher 6, hier einem Arbeitsaggregat 7 in Form einer Häckslertrommel, geführt. Ein anderer Leistungsverbraucher 8 bildet einen Fahrantrieb 9 mit einer Antriebsachse für Antriebsräder.

Außerdem verfügt die Arbeitsmaschine 1 über ein Energiebereitstellungssystem 10, das zum einen als Hauptmaschine eine Verbrennungskraftmaschine 11 in Form eines Dieselmotors und zum anderen eine Hilfskraftmaschine 12, hier und vorzugsweise in Form einer Elektromaschine, aufweist. Das Energiebereitstellungssystem 10 dient sowohl zum Antrieb des Fahrantriebs 9 als auch, und zwar gleichzeitig, zum Antrieb verschiedener Arbeitsaggregate 7.

Dazu ist als Bestandteil des Energiebereitstellungssystems 10 ein von der Verbrennungskraftmaschine 11 ausgehender Antriebsstrang 13 vorgesehen, der dem Ausleiten von Antriebsleistung der Verbrennungskraftmaschine 11 an die Leistungsverbraucher 6 und 8 dient. Der Antriebsstrang 13 weist hier und vorzugweise drei Teilantriebsstränge 13a, 13b und 13c auf, in die sich dieser aufteilt. Die Hilfskraftmaschine 12 ist an den Antriebsstrang 13 angekoppelt, beispielsweise über ein Getriebe (nicht dargestellt).

Der erste Teilantriebsstrang 13a ist hier und vorzugsweise zum Übertragen von Antriebsleistung der Verbrennungskraftmaschine 11 an das mindestens eine Arbeitsaggregat 7 (z.B. Häckslertrommel) konfiguriert. Der zweite Teilantriebsstrang 13b ist hier und vorzugsweise zum Übertragen von Antriebsleistung der Verbrennungskraftmaschine 11 an den Fahrantrieb 9 konfiguriert. Der dritte Teilantriebsstrang 13c ist hier und vorzugsweise zum wechselseitigen Austausch von Antriebsleistung zwischen der Verbrennungskraftmaschine 11 und der Hilfskraftmaschine 12 konfiguriert.

Die Hilfskraftmaschine 12, die hier als Elektromaschine ausgebildet ist, ist Bestandteil eines Hybridsystems 14, das einen mit der Hilfskraftmaschine 12 hier elektrisch verbundenen Energiespeicher 15 aufweist. Die Hilfskraftmaschine 12 in dem dargestellten Ausführungsbeispiel kann, wenn überschüssige Leistung von der Verbrennungskraftmaschine 11 zur Verfügung steht, als elektrischer Generator betrieben werden. Insbesondere kann die Hilfskraftmaschine 12 den Antriebsstrang 13 jedoch unterstützen, wenn aufgrund eines Anstiegs des Leistungsbedarfs des Arbeitsaggregats 7 die Drehzahl an einer Abtriebswelle 16 der Verbrennungskraftmaschine 11 einzubrechen droht.

Mit der Abtriebswelle 16 ist eine mit der Verbrennungskraftmaschine 11 verbundene Welle gemeint, auf die von der Verbrennungskraftmaschine 11 und gegebenenfalls der Hilfskraftmaschine 12 ein Drehmoment übertragen wird und mittels der zumindest das Arbeitsaggregat 7 und der Fahrantrieb 9 angetrieben werden.

Die landwirtschaftliche Arbeitsmaschine 1 weist außerdem ein Fahrerassistenzsystem 17 mit einer Regeleinrichtung bzw. einem sogenannten Vorfahrtregler 18 auf, die bzw. der konfiguriert ist, eine Regelung der Verbrennungskraftmaschine 11, der Hilfskraftmaschine 12 und des Fahrantriebs 9 durchzuführen.

Das in den Figuren dargestellte und insoweit bevorzugte Ausführungsbeispiel betrifft eine landwirtschaftliche Arbeitsmaschine 1, insbesondere Erntemaschine, die unter einer Anwesenheit eines Fahrers 2 in einem manuellen Modus manuell fahrbar und insbesondere in einem Automatikmodus selbstfahrbar ist, wobei ein Leistungsverbraucher 8 in Form eines Fahrantriebs 9 und mindestens ein weiterer Leistungsverbraucher 6 vorgesehen sind, wobei ein Energiebereitstellungssystem 10 mit einer Verbrennungskraftmaschine 11, einer Hilfskraftmaschine 12 und einem Energiespeicher 15 für die Hilfskraftmaschine 12 vorgesehen ist, wobei die Leistungsverbraucher 6, 8 von dem Energiebereitstellungssystem 10 antreibbar sind, wobei ein Fahrerassistenzsystem 17 mit einer Regeleinrichtung 18 vorgesehen ist, die konfiguriert ist, eine Regelung der Verbrennungskraftmaschine 11, der Hilfskraftmaschine 12 und mindestens eines der weiteren Leistungsverbraucher 6 durchzuführen, wobei die Regeleinrichtung 18 des Fahrerassistenzsystems 17 in dem manuellen Modus und insbesondere dem Automatikmodus die Drehzahl an einer Abtriebswelle 16 der Verbrennungskraftmaschine 11 derart regelt, dass die Drehzahl bei variierendem Leistungsbedarf des Fahrantriebs 9 und des mindestens einen weiteren Leistungsverbrauchers 6 auf einem konstanten Wert oder in einem konstanten Wertebereich gehalten wird.

Wesentlich ist nun, dass die landwirtschaftliche Arbeitsmaschine 1 ein Rückmeldungssystem 19 aufweist, das konfiguriert ist, dem Fahrer 2 eine von einer Gesamtauslastung des Energiebereitstellungssystems 10 abhängige Rückmeldung zu geben.

Insbesondere ist es denkbar, dass das Rückmeldungssystem 19 konfiguriert ist, dem Fahrer 2 abhängig von der Gesamtauslastung des Energiebereitstellungssystems 10 eine Rückmeldung über einen Energieverbrauch des Energiebereitstellungssystems 10 und/oder einen Energieverbrauch des Energiebereitstellungssystems 10 in Relation zum maximalen Energieverbrauch des Energiebereitstellungssystems 10 und/oder eine Energiereserve des Energiebereitstellungssystems 10 zu geben.

Der Energieverbrauch des Energiebereitstellungssystems 10 ist ein Kraftstoffverbrauch der Verbrennungskraftmaschine 11 und/oder ein Verbrauch von insbesondere elektrischer Energie des Energiespeichers 15 der Hilfskraftmaschine 12. Der Energiespeicher 15 kann wie hier als elektrischer Energiespeicher 15, beispielsweise als Akku und/oder Batterie, ausgebildet sein. Zusätzlich oder alternativ können als elektrischer Energiespeicher 15 auch Kondensatoren, insbesondere Superkondensatoren (zum Beispiel sogenannte Supercaps oder Ultracaps), vorgesehen sein.

Zusätzlich oder alternativ zu einer elektrischen Hilfskraftmaschine 12 und dem elektrischen Energiespeicher 15 können als Hilfskraftmaschine 12 und Energiespeicher 15 weiterhin Hydraulikpumpen und Druckspeicher, wie beispielsweise Stickstoffspeicherblasen, vorgesehen sein.

Mit dem Energieverbrauch in Relation zum maximalen Energieverbrauch ist das Verhältnis zwischen aktuellem und maximal möglichem Energieverbrauch gemeint. So ist es denkbar, dass sich der maximal mögliche Energieverbrauch durch beispielsweise ein Heißlaufen oder eine Fehlfunktion eines Elektromotors der Hilfskraftmaschine 12, wenn mehrere Elektromotoren vorhanden sind, ändern kann und somit der maximal mögliche Energieverbrauch geringer als im Normalfall ist. Dann ist es vorteilhaft, das Verhältnis zwischen aktuellem und maximal möglichem Energieverbrauch zu kennen bzw. zu überwachen. Der maximale Energieverbrauch umfasst den Energieverbrauch der gesamten landwirtschaftlichen Arbeitsmaschine 1, der der landwirtschaftlichen Arbeitsmaschine 1 maximal zur Verfügung steht.

Mit einer Energiereserve des Energiebereitstellungssystems 10 ist ein Füllstand eines Kraftstofftanks der landwirtschaftlichen Arbeitsmaschine 1 und/oder ein Ladezustand des Energiespeichers 15 gemeint.

Mit Energiebereitstellungssystem 10 sind alle Komponenten eines Antriebsstrangs der landwirtschaftlichen Arbeitsmaschine 1 gemeint, die hier und vorzugsweise die Verbrennungskraftmaschine 11, die Hilfskraftmaschine 12, die Energiereserve und eine Leistungselektronik der landwirtschaftlichen Arbeitsmaschine umfassen kann.

Hier und vorzugsweise ist bei dem Ausführungsbeispiel in Fig. 2a) vorgesehen, dass das Rückmeldungssystem 19 auslastungsabhängig eine haptische Rückmeldung 19a gibt, insbesondere derart, dass der Fahrer 2 ein Rütteln spürt, vorzugweise, dass die haptische Rückmeldung 19a eine auslastungsabhängige Vibration in einer Komponente ist, die bei bestimmungsgemäßem Betrieb der landwirtschaftlichen Arbeitsmaschine 1 in direktem Kontakt mit dem Fahrer 2 ist, weiter vorzugsweise, dass die haptische Rückmeldung 19a eine auslastungsabhängige Vibration im Fahrhebel 20 und/oder im Fahrersitz 21 der landwirtschaftlichen Arbeitsmaschine 1 ist.

Mit dem Begriff "auslastungsabhängig" ist die Abhängigkeit von der Gesamtauslastung des Energiebereitstellungssystems 10 und insbesondere von dem Energieverbrauch und/oder der Energiereserve des Energiebereitstellungssystems 10 gemeint.

Weiter kann zusätzlich oder alternativ vorgesehen sein, dass das Rückmeldungssystem 19 auslastungsabhängig eine akustische Rückmeldung 19b gibt, insbesondere derart, dass der Fahrer 2 ein auslastungsabhängiges Geräusch in einer Kabine 22 der landwirtschaftlichen Arbeitsmaschine 1 hört, vorzugsweise, dass die akustische Rückmeldung 19b über eine Kabinenaudioanlage 23 der landwirtschaftlichen Arbeitsmaschine 1 erzeugbar ist (Fig. 2b).

Mit einer Kabinenaudioanlage ist ein Element zur Erzeugung und/oder Abgabe von Geräuschen oder Tönen in der Kabine 24 der landwirtschaftlichen Arbeitsmaschine 1 gemeint, die von dem Fahrer 2 bedienbar ist. Vorzugsweise kann die Kabinenaudioanlage derart bedient werden, dass der Fahrer 2 die Geräusche oder Töne auswählen kann.

Mit einem Geräusch ist ein akustisches Signal gemeint, dass ein einzelner Ton oder eine aus einem oder mehreren Tönen zusammengesetzte Tonfolge oder Melodie sein kann.

Darüber hinaus kann zusätzlich oder alternativ vorgesehen sein, dass das Rückmeldungssystem 19 auslastungsabhängig eine optische Rückmeldung 19c gibt, insbesondere derart, dass der Fahrer 2 eine auslastungsabhängige Anzeige erhält, vorzugsweise, dass die optische Rückmeldung 19c über ein Display 24 und/oder mindestens ein Leuchtmittel 25 erzeugt wird, weiter vorzugsweise, dass die optische Rückmeldung 19c als ein Blinklicht mit einer sich verändernden, insbesondere steigenden, Blinkfrequenz und/oder als eine Balkendarstellung mit einem minimalen und einem maximalen Bereich eingerichtet ist, und/oder, dass die optische Rückmeldung 19c Bestandteil eines Head-Up-Displays und/oder einer Augmented-reality Komponente ist (Fig. 2c).

Mit Leuchtmitteln 25 sind künstliche Lichtquellen wie LEDs oder Glühbirnen gemeint, die zumindest dann, wenn eine optische Rückmeldung 19c gegeben wird, permanent leuchtend oder blinkend ausgebildet sein können und insbesondere auslastungsabhängig in verschiedenen Helligkeiten und/oder Farben und/oder mit verschiedenen Blinkfrequenzen leuchten können.

Zusätzlich oder alternativ kann vorgesehen sein, dass das Rückmeldungssystem 19 auslastungsabhängig eine systemische Rückmeldung gibt, insbesondere derart, dass als systemische Rückmeldung eine Veränderung, insbesondere Absenkung, der Drehzahl der Abtriebswelle 16 der Verbrennungskraftmaschine 11 erfolgt, vorzugsweise, dass die Absenkung der Drehzahl der Abtriebswelle 16 der Verbrennungskraftmaschine 11 derart erfolgt, dass der Fahrer 2 ein Gefühl einer landwirtschaftlichen Arbeitsmaschine mit konventionellem Antrieb wahrnimmt.

Mit dem Gefühl einer Arbeitsmaschine mit konventionellem Antrieb, welches der Fahrer 2 wahrnimmt, ist gemeint, dass bei einer Erhöhung der Gesamtauslastung bzw. solange die Gesamtauslastung erhöht oder in einem kritischen Bereich ist, der Fahrer 2 die Veränderung, insbesondere Absenkung, der Drehzahl an der Abtriebswelle 16 der Verbrennungskraftmaschine 11 wahrnimmt. Die Veränderung, insbesondere Absenkung, der Drehzahl an der Antriebswelle kann sowohl eine vorbestimmte Zeitdauer andauern, als auch temporär (ähnlich wie ein Blinklicht) ausgeführt werden.

### Bezugszeichenliste

- 1: Landwirtschaftliche Arbeitsmaschine
- 2: Fahrer
- 3: Feldbestand
- 4: Gutfluss
- 5: Einzugskanal
- 6: Leistungsverbraucher
- 7: Arbeitsaggregat
- 8: Leistungsverbraucher
- 9: Fahrantrieb
- 10: Energiebereitstellungssystem
- 11: Verbrennungskraftmaschine
- 12: Hilfskraftmaschine
- 13: Antriebsstrang
- 13a: Erster Teilantriebsstrang
- 13b: Zweiter Teilantriebsstrang
- 13c: Dritter Teilantriebsstrang
- 14: Hybridsystem
- 15: Energiespeicher
- 16: Abtriebswelle der Verbrennungskraftmaschine
- 17: Fahrerassistenzsystem
- 18: Regeleinrichtung des Fahrassistenzsystems bzw. Vorfahrtregler
- 19: Rückmeldungssystem
- 19a: Haptische Rückmeldung
- 19b: Akustische Rückmeldung
- 19c: Optische Rückmeldung
- 20: Fahrhebel
- 21: Fahrersitz
- 22: Kabine
- 23: Kabinenaudioanlage
- 24: Display
- 25: Leuchtmittel

## Patentansprüche

1. Landwirtschaftliche Arbeitsmaschine, insbesondere Erntemaschine, die unter einer Anwesenheit eines Fahrers (2) in einem manuellen Modus manuell fahrbar und insbesondere in einem Automatikmodus selbstfahrbar ist, wobei ein Leistungsverbraucher (8) in Form eines Fahrantriebs (9) und mindestens ein weiterer Leistungsverbraucher (6) vorgesehen sind, wobei ein Energiebereitstellungssystem (10) mit einer Verbrennungskraftmaschine (11), einer Hilfskraftmaschine (12) und einem Energiespeicher (15) für die Hilfskraftmaschine (12) vorgesehen ist, wobei die Leistungsverbraucher (6, 8) von dem Energiebereitstellungssystem (10) antreibbar sind, wobei ein Fahrerassistenzsystem (17) mit einer Regeleinrichtung (18) vorgesehen ist, die konfiguriert ist, eine Regelung der Verbrennungskraftmaschine (11), der Hilfskraftmaschine (12) und mindestens eines der weiteren Leistungsverbraucher (6) durchzuführen, wobei die Regeleinrichtung (18) des Fahrerassistenzsystems (17) in dem manuellen Modus und insbesondere dem Automatikmodus die Drehzahl an einer Abtriebswelle (16) der Verbrennungskraftmaschine (11) derart regelt, dass die Drehzahl bei variierendem Leistungsbedarf des Fahrantriebs (9) und des mindestens einen weiteren Leistungsverbrauchers (6) auf einem konstanten Wert oder in einem konstanten Wertebereich gehalten wird,
**dadurch gekennzeichnet,**
**dass** die landwirtschaftliche Arbeitsmaschine (1) ein Rückmeldungssystem (19) aufweist, das konfiguriert ist, dem Fahrer (2) eine von einer Gesamtauslastung des Energiebereitstellungssystems (10) abhängige Rückmeldung zu geben.

2. Landwirtschaftliche Arbeitsmaschine nach Anspruch 1, **dadurch gekennzeichnet, dass** das Rückmeldungssystem (19) auslastungsabhängig eine haptische Rückmeldung (19a) gibt, insbesondere derart, dass der Fahrer (2) ein Rütteln spürt, vorzugweise, dass die haptische Rückmeldung (19a) eine auslastungsabhängige Vibration in einer Komponente ist, die bei bestimmungsgemäßem Betrieb der landwirtschaftlichen Arbeitsmaschine (1) in direktem Kontakt mit dem Fahrer (2) ist, weiter vorzugsweise, dass die haptische Rückmeldung (19a) eine auslastungsabhängige Vibration im Fahrhebel (20) und/oder im Fahrersitz (21) der landwirtschaftlichen Arbeitsmaschine (1) ist.

3. Landwirtschaftliche Arbeitsmaschine nach Anspruch 1 oder 2, **dadurch gekennzeichnet, dass** das Rückmeldungssystem (19) auslastungsabhängig eine akustische Rückmeldung (19b) gibt, insbesondere derart, dass der Fahrer (2) ein auslastungsabhängiges Geräusch in einer Kabine (22) der landwirtschaftlichen Arbeitsmaschine (1) hört, vorzugsweise, dass die akustische Rückmeldung (19b) über eine Kabinenaudioanlage (23) der landwirtschaftlichen Arbeitsmaschine (1) erzeugbar ist.

4. Landwirtschaftliche Arbeitsmaschine nach einem der vorherigen Ansprüche, **dadurch gekennzeichnet, dass** das Rückmeldungssystem (19) auslastungsabhängig eine optische Rückmeldung (19c) gibt, insbesondere derart, dass der Fahrer (2) eine auslastungsabhängige Anzeige erhält, vorzugsweise, dass die optische Rückmeldung (19c) über ein Display (24) und/oder mindestens ein Leuchtmittel (25) erzeugt wird, weiter vorzugsweise, dass die optische Rückmeldung (19c) als ein Blinklicht mit einer sich verändernden, insbesondere steigenden, Blinkfrequenz und/oder als eine Balkendarstellung mit einem minimalen und einem maximalen Bereich eingerichtet ist, und/oder, dass die optische Rückmeldung (19c) Bestandteil eines Head-Up-Displays und/oder einer Augmented-reality Komponente ist.

5. Landwirtschaftliche Arbeitsmaschine nach einem der vorherigen Ansprüche, **dadurch gekennzeichnet, dass** das Rückmeldungssystem (19) auslastungsabhängig eine systemische Rückmeldung gibt, insbesondere derart, dass als systemische Rückmeldung eine Veränderung, insbesondere Absenkung, der Drehzahl der Abtriebswelle (16) der Verbrennungskraftmaschine (11) erfolgt, vorzugsweise, dass die Absenkung der Drehzahl der Abtriebswelle (16) der Verbrennungskraftmaschine (11) derart erfolgt, dass der Fahrer (2) ein Gefühl einer landwirtschaftlichen Arbeitsmaschine mit konventionellem Antrieb wahrnimmt.
